# EUROPEAN PATENT SPECIFICATION

(11) **EP 0 529 673 B1**
(45) Date of publication and mention of the grant of the patent: **11.03.1998**
(21) Application number: 92114842.5
(22) Date of filing: 31.08.1992
(51) Int. Cl.: G11B 5/85, C23C 14/00, C23C 14/24

(54) **Method for manufacturing a thin film**
Verfahren zur Herstellung eines dünnen Filmes
Procédé pour la fabrication d'un film mince

(30) Priority: 30.08.1991 JP 219552/91
(43) Date of publication of application: 03.03.1993
(73) Proprietor: MATSUSHITA ELECTRIC INDUSTRIAL CO., LTD., Kadoma-shi, Osaka-fu, 571 (JP)
(72) Inventor: Kawawake, Yasuhiro, Suita-shi (JP); Sugita, Ryuji, Hirakata-shi (JP); Tohma, Kiyokazu, Hirakata-shi (JP); Goto, Yoshiki, Kitakatsuragi-gun, Nara-ken (JP); Ishida, Tatsuaki, Sakai-shi (JP)
(74) Representative: Patentanwälte Leinweber & Zimmermann

(56) References cited:
- EP-A- 0 415 335
- US-A- 5 000 995

## Description

### BACKGROUND OF THE INVENTION

### Field of the Invention

The present invention relates to a method for manufacturing a thin film which is capable, when forming a thin film of metal or alloy on a substrate by means of vacuum deposition, of designing the surface of the film to have an adequate surface configuration by properly controlling the conditions in which the thin film is formed, thereby making it possible to easily produce the thin film with excellent practical properties.

### Description of the Prior Art

Thin films of metal or alloy are put into practical use in various fields including condenser and magnetic tape. As the method for manufacturing the metal or alloy thin film, there are known vacuum deposition, sputtering, plating and the like. The vacuum deposition is capable of forming the metal thin film at high film-forming velocity of more than 1 µm/s and, hence, it is suitable for mass production of the thin film.

When manufacturing the thin film, the configuration of the surface of the thin film has a significant meaning in some cases from the viewpoint of availability of the thin film. For the magnetic tape, for example, it is required to properly roughen the surface. This is because, since the magnetic tape must be used as it is transported by a tape deck, it is necessary to have the improved slidability with respect to the portions with which the magnetic tape is brought into contact when it is transported.

In general, in a case where solid bodies are brought into contact with each other, if the contact surfaces are smooth, the actual contact area is increased to thereby increase the frictional force. Accordingly, in order to reduce the frictional force so as to improve the slidability, it is necessary to design the surface of the solid body to have proper roughness. To cope with this, in the thin film magnetic recording medium, it has conventionally been tried to form projections on the surface of the substrate by adding fine particles in the substrate (U.S.P. No. 4,910,068) or by dispersing fine particles on the surface of the substrate (U.S.P. No. 4,762,742), thereby increasing the surface roughness.

However, according to the method of spreading the fine particles on the surface of the substrate, it is difficult to uniformly apply or disperse the fine particles on the surface of the substrate since the fine particles themselves are liable to agglomerate. Moreover, the smaller the size of the fine particles is, the more it becomes difficult to uniformly apply them. On the other hand, according to the method of adding the fine particles into a high-polymer film, it is difficult to form uniform projections on the surface of the substrate even if using the fine particles of a predetermined size. As a result, it has been difficult according to these methods to design the surface in such a manner that low projections with uniform height are formed on the surface of the thin film. If it is failed to form the low and uniform projections on the surface of the thin film, the runability of for example the magnetic recording medium can not be ensured or, even if the runability can be ensured, the space distance between the magnetic recording media and the magnetic head is increased to make it impossible to obtain the satisfactory reproduction output.

### SUMMARY OF THE INVENTION

An object of the present invention is to design a surface of a thin film to have an adequate surface configuration so as to make it possible to produce the thin film with excellent practical properties without difficulty.

To this end, the present invention is characterized by that, when forming a thin film of metal alloy on a substrate by means of vacuum deposition, a substrate having a center-line-averaged surface roughness Ra of not more than 3nm with respect to the center line of the surface of the substrate is employed in which projections with height levels not less than 10 nm are formed on a surface thereof at a density of not more than 1 x 106 projections/mm², that the initial incident angle of atoms upon the substrate, which serve to constitute the thin film, is set at not less than 50° with respect to the normal (vertical) line of the substrate, and that the temperature of the substrate is set at not less than 100°C. Said thin film has a thickness of from 100 nm to 400 nm.

As described before, in order to decrease the friction coefficient of the metal thin film, it is effective to form fine roughness on the surface of the metal thin film. The present invention is one of the methods of forming the fine roughness on the surface of the metal thin film and is excellent in the point that it is capable of forming low projections uniformly on the surface of the metal thin film as well as it is easily put into practice.

In general, on the occasion of forming a metal thin film by means of deposition, the incident angle of evaporated atoms upon the substrate has great effects upon the fine structure of the thin film. Considering from the viewpoint of the configuration of the thin film, as the incident angle is increased, many voids are formed in the film due to self-shading effect. Further, the temperature of the substrate also has great effects upon the fine structure of the thin film so that the increase of the temperature of the substrate generally tends to increase the size of crystal grains.

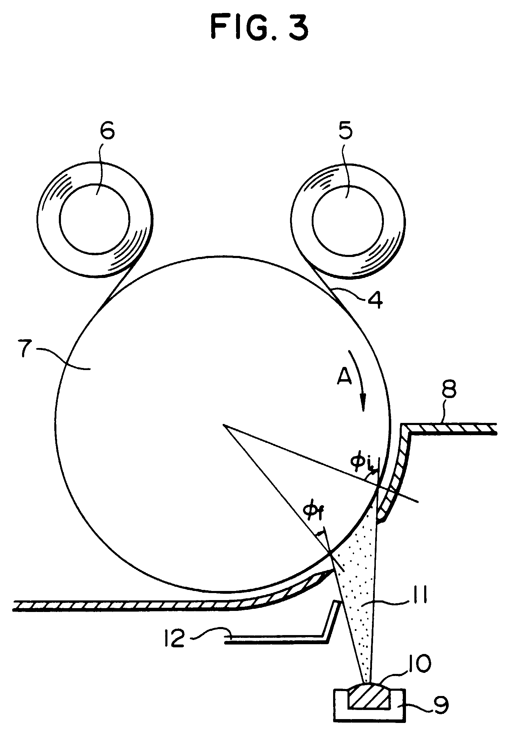

Figure 3 shows an example of an apparatus for manufacturing a thin film by making use of a continuous deposition method. Referring to Figure 3, a polymer substrate 4 unwound from a supply reel 5 is made to travel along the peripheral surface of the cylindrical can in the direction of an arrow A so as to be wound on a take-up reel 6. At this time, evaporated atoms 11 scattered from an evaporation source 10 contained in a crucible 9 adhere to the surface of the high-polymer substrate 4 on the peripheral surface of the cylindrical can 7, thereby forming a thin film. The incident angle of the evaporated atoms 11 upon the substrate is varied continuously from an initial incident angle φi to a final incident angle φf by virtue of a mask plate 8. Reference numeral 12 denotes a gas introducing pipe which is used in a case of the reactive vapor deposition.

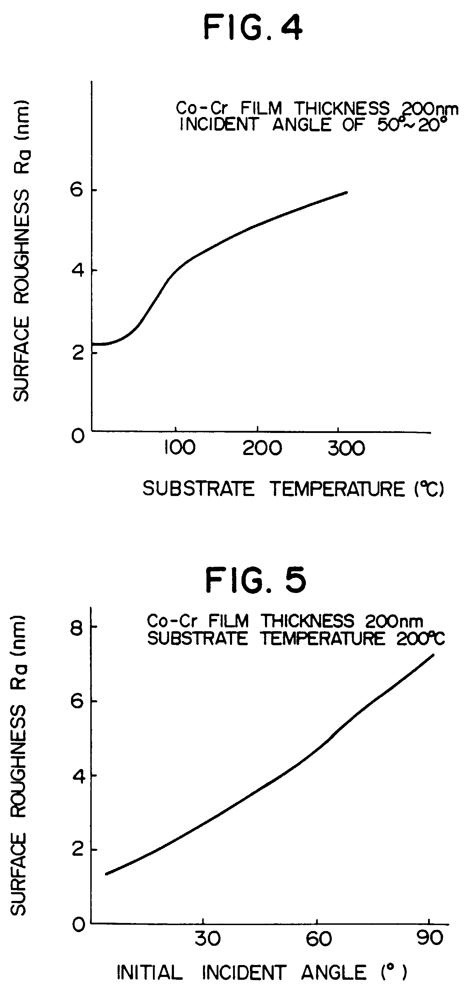

Figure 4 shows the relation between the temperature of the substrate and the surface roughness obtained when a Co-Cr film of 200 nm thickness was formed by means of the continuous deposition process. In this case, the incident angle of the evaporated atoms upon the substrate was set to be in the range from 50° to 20° with respect to the normal line of the substrate. It is seen from this drawing that the surface roughness of the substrate is increased with the rise of the temperature of the substrate. Ra takes the value of about 4 pm at 100°C. As described later, it is found from the result of experiment that the surface roughness with which a low friction coefficient can be obtained is about 4 pm at the minimum. Further, Figure 5 shows the relation between the initial incident angle φi and the surface roughness. In this case, the final incident angle φf is set to satisfy an equation φf = φi - 30°, and the temperature of the substrate is maintained constant at 200°C. It is seen from Figure 5 that even if a thin film is formed at a high temperature of 200°C, when the initial incident angle φi is small, that is, when the substantially vertical incidence is employed in forming the thin film, the surface roughness of the thin film is small. However, the surface roughness is increased as the incident angle is increased. As explained above, the surface roughness of the thin film is greatly affected by the temperature of the substrate and the incident angle of the evaporated atom. Accordingly, it is the feature of the present invention to form suitable projections on the film surface by controlling these two factors properly. It is insufficient that the temperature of the substrate is raised alone or the incident angle is increased alone, however, by raising the temperature of the substrate to 100°C or more as well as setting the initial incident angle at 50° or more, it becomes possible to manufacture an adequate roughness on the surface of the thin film. Further, by employing, as the substrate, a relatively smooth substrate, that is, a substrate in which not more than 1 x 10⁶ projections with height levels not less than 10 pm are formed per 1 mm², the surface configuration depending on the metal or alloy layer can be made controllable.

According to the method for manufacturing the thin film of the present invention, it is possible to easily form low and uniform projections on the surface of the thin film. This makes it possible to decrease the friction coefficient. Further, by utilizing the method of the present invention in manufacturing the magnetic tape, it is possible to minimize the gap between the medium and the head at the time of recording and reproducing, resulting in that it becomes possible to manufacture a medium with high recording and reproducing output and with excellent running characteristic. In addition, since the projections on the surface of the thin film are uniform, it becomes possible to manufacture a magnetic tape which hardly causes partial abrasion of the head.

### BRIEF DESCRIPTION OF THE DRAWINGS

Figures 1a, 1b and 1c are a sectional view of a substrate used in the process of manufacturing a thin film according to an embodiment of the present invention, a sectional view of a thin film layer after the thin film layer is formed, and a sectional view of the thin film layer after a carbon layer is formed, respectively;
Figures 2a, 2b and 2c are a sectional view of a substrate used in the process of manufacturing a thin film according to the prior art, a sectional view of a thin film after the thin film layer is formed, and a sectional view of the thin film after the carbon layer is formed, respectively;
Figure 3 is a schematic sectional view of a continuous deposition apparatus;
Figure 4 is a graph showing the relation between the temperature of the substrate and the surface roughness of the thin film;
Figure 5 is a graph showing the relation between the initial incident angle and the surface roughness of the thin film;
Figures 6a and 6b are a graph showing the surface roughness of the conventional substrate and a graph showing the surface roughness of the substrate according to the embodiment of the present invention, respectively, when observed with STM;
Figure 7 is a graph showing the relation between the temperature of the substrate and the dynamic friction coefficient;
Figure 8 is a graph showing the relation between the initial incident angle and the dynamic friction coefficient;
Figures 9a and 9b are sectional views of a substrate having concaved portions formed therein;
Figure 10 is a graph showing the relation between the number of projections on the surface of the substrate and S/N of the Co-Cr tape; and
Figure 11 is a graph showing the relation between the surface roughness Ra of substrate and S/N of the Co-Cr tape.

### DESCRIPTION OF THE PREFERRED EMBODIMENTS

A method for manufacturing a thin film according to the present invention will be described below with reference to the drawings.

### Embodiment 1

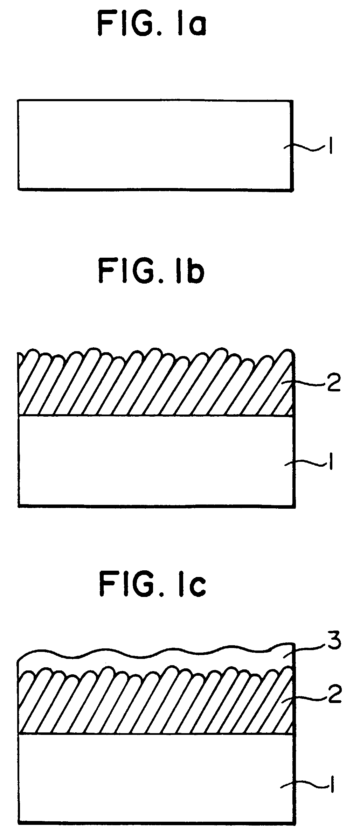

Figures 1a to 1c are sectional views of a thin film in the manufacturing steps of a method for manufacturing a thin film according to an embodiment of the present invention. It is suitable that a substrate to be used is a very smooth one as shown in Figure 1a. When a thin film is manufactured by the method of the present invention using a substrate the surface of which is rough, high projections are formed on the surface of the substrate, resulting in that the rough substrate is not suitable for the present invention. The roughness of the surface of the substrate was investigated by making use of a probe-type surface roughness gage (named Talisurf 500A, manufactured by Tokyo Seimitsu Co., Ltd.). The radius of curvature of the probe used at this time was 0.1 µm at the tip end thereof. As a result of this investigation, it was found that the suitable center-line-averaged surface roughness Ra of the substrate is not greater than 3 nm, preferably not greater than 2 nm. If the surface roughness of the substrate is more than that upper limit value, the surface roughness of the thin film becomes too large when the thin film is manufactured by the method of the present invention. On the other hand the configuration of the surface of the substrate was observed with use of a scanning tunnel microscope (STM). One field of vision of the STM was so determined as to cover a specimen of a range defined by four equal sides of about 3.3 µm length and having an area of 10 µm².

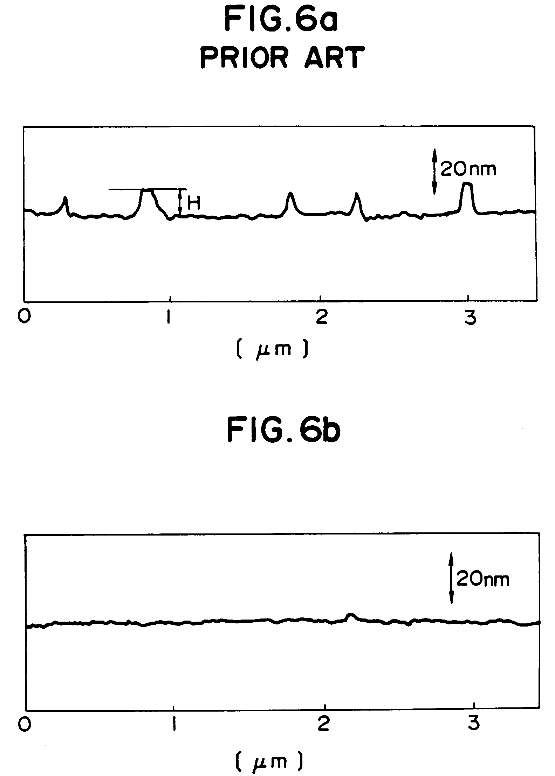

In Figures 6a and 6b, the abscissa represents the distance on the surface of the substrate, while the ordinate represents the roughness thereon. As shown in Figure 6a, the height H of the projection can be expressed as a height obtained as a result of comparison of a single projection with the background thereof.

In the substrate of Figure 6a, there were observed one hundred or more projections with height levels not less than 10 nm per 10 µm², while in the substrate of Figure 6b, there was observed one or less projection with height levels not less than 5 nm per the same area. It is desirable to use the substrate shown in Figure 6b as the substrate to be used in the present invention. It is necessary to prepare the substrate which has not more than ten projections with height levels not less than 5 nm per 10 µm² on the surface thereof. Converting into the number per 1 mm², it is preferred that there exist not more than 1 x 10⁶ projections with the same height levels as described above. If the number of projections exceeds this value, the projections become too large when a metal or alloy thin film is formed.

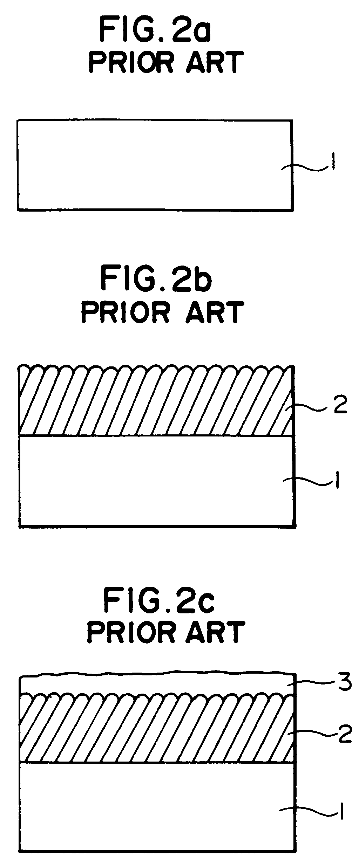

While heating a substrate shown in Figure 1a at temperatures above 100°C, a metal or alloy thin film layer 2 is formed with setting the initial incident angle of evaporated atoms upon the substrate at more than 50°. The metal or alloy thin film thus manufactured is formed on the surface thereof with suitable roughness as shown in Figure 1b, thereby exhibiting a low coefficient of friction. In order to further improve the durability of such metal thin film 2, it is also effective to form a carbon film 3 on the surface as shown in Figure 1c. In this case, the surface configuration shown in Figure 1b can be nearly preserved even after the carbon film 3 is formed so that, due to the projections thus hardened, the friction coefficient and the durability to friction can be further improved. Figures 2a to 2c show the case where the metal or alloy thin film 2 is formed on the same substrate as that of Figure 1 in the same manner as Figure 1 except that the temperature of the substrate is 30°C. In this case, the surface roughness of the thin film of Figure 2b is relatively small differently from that of Figure 1b. Therefore, the friction coefficient becomes large. In the case of Figures 2, even if the carbon film 3 is formed on the surface as shown in Figure 2c, the friction coefficient becomes large because the projections on the surface are too low in height. In a case where the incident angle of the evaporated atoms upon the substrate is set to be in the range from 40° to 10°, the surface roughness of the thin film is small even if the substrate is heated to the temperature of 250°C, so that the surface roughness of the thin film cannot be increased like the thin film of Figure 2b. In order to design a proper surface roughness on the surface of the thin film, it is necessary to heat the substrate to a temperature not less than 100°C as well as to set the initial incident angle at 50° or more. Further, the thickness of the alloy thin film layer 2 is in the range from 100 nm to 400 nm. A thickness less than 100 nm tends to fail in the formation of the satisfactorily large projections, while a thickness exceeding 400 nm tends to result in the formation of too large projections.

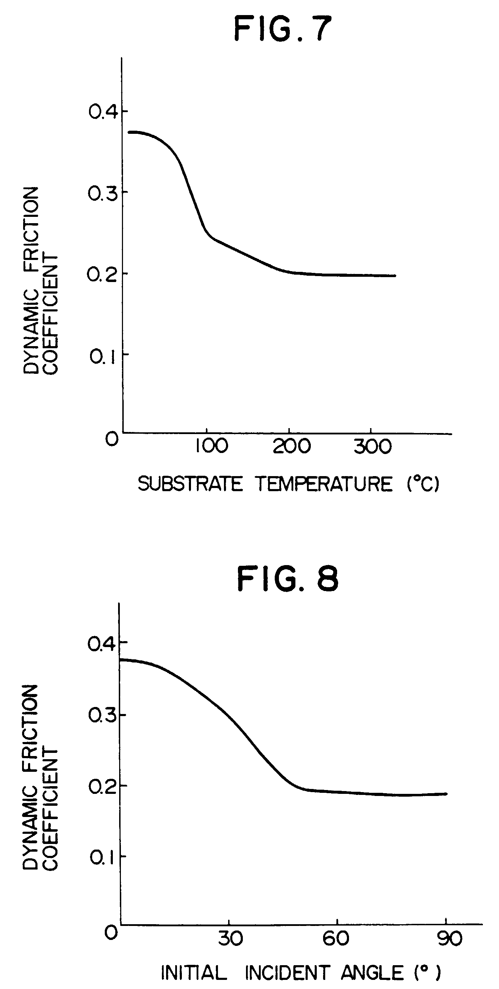

Next, the method for manufacturing the thin film according to the present invention will be described in conformity with a more specific embodiment. As the substrate, a polyimide substrate was employed having a thickness of 10 µm, an Ra of 1.8 nm and a projection density of not more than 1 x 10⁶ projections/mm² with respect to projections having a height not less than 5 nm. A thin film of Co-Cr alloy was formed by utilizing a vacuum deposition apparatus shown in Figure 3. In this case, the Co-Cr alloy was used as an evaporation source 10, and the incident angle of the evaporated atoms upon the substrate was varied by changing φi and φf. The temperature of the substrate was varied by changing the temperature of a cylindrical can 7. In this case, the speed at which the Co-Cr film is formed was set at 0.2 µm/sec and the thickness of the film was set at 0.2 µm. The Co-Cr film prepared in this way was slit into a tape having a width of 8 mm and the dynamic friction coefficient was measured by a drawing method. The conditions of measurement at this time were such that the material of a post was SUS303, the surface roughness was 0.2S, the relative velocity of the tape and post was 3.8 m/min, and the pressure applied was 20 gf. The results of measurement of the dynamic friction coefficient obtained by the drawing method are shown in Figures 7 and 8. These results of measurement are the values of the dynamic friction coefficient obtained at the tenth pass. Figure 7 shows the relation between the temperature of the substrate and the dynamic friction coefficient at the time of manufacturing the Co-Cr film, in which the incident angle is fixed to be in the range from 50° to 20°. It is seen from Figure 7 that the dynamic friction coefficient is decreased as the temperature of the substrate is raised. The dynamic friction coefficient is lowered below 0.25 at temperatures above 100°C, and is further lowered down to about 0.2 at temperatures above 200°C. It is considered that the reason why the dynamic friction coefficient is lowered with the rise of the temperature is that the surface roughness of the substrate is increased as shown in Figure 4. It is also considered that the dynamic friction coefficient is lowered to a great extent at about 100°C because the projections formed on the thin film surface have no effect on the dynamic friction coefficient unless the height levels thereof become greater than a certain level in relation to the surface roughness of the post. Figure 8 shows the relationship between the initial incident angle and the dynamic friction coefficient of the Co-Cr film manufactured when the temperature of the substrate was 200°C. In this case, the final incident angle φf = φi - 30°. It is seen that the dynamic friction coefficient is decreased with the increase of the initial incident angle. It is seen from Figure 8 that it is necessary to set the initial incident angle not less than 50° in order to obtain a low dynamic friction coefficient. As the reason for this, it is considered that the surface roughness of the film surface is increased with the increase of the initial incident angle as shown in Figure 5.

As described above, it is found from the measurement of the dynamic friction coefficient that, in order to roughen the smooth surface of the substrate by forming the projections thereon so as to lower the dynamic friction coefficient, it is necessary, when forming the thin film, to set the temperature of the substrate at at least 100°C, preferably at 200°C or more, and the initial incident angle not less than 50° or more.

Subsequently, a carbon film of thickness about 10 nm was further formed on the surface of the thus-prepared Co-Cr film by a plasma CVD method and a fluoric lubricant was further applied onto the surface of the carbon film, which was then slit into the tape having a width of 8 mm. Using this tape and a high-band 8-mm deck on the market, evaluation of S/N of the luminance signal and measurement of the friction coefficient (µ) by use of the aforesaid drawing method were performed. As the substrate in this case, polyimide substrates having different surface roughnesses were employed. The substrate was heated to the temperature of 250°C at the time of evaporation. Results of evaluation performed in this way are shown in Table 1. In Table 1, both Ra and the number of projections with height levels not less than 10 nm per 10 µm² were those measured before the formation of the metal or alloy thin film layer. S/N is expressed in relative values with the value of Comparison 2 being regarded as the standard. The tape of Embodiment 1 employs a smooth substrate having a small Ra and a small number of projections with height levels not less than 10 nm, however, if a Co-Cr film is formed on this substrate at the incident angle ranging from 50° to 20°, it is possible to obtain a film which exhibits a high S/N, a low friction coefficient (µ) and excellent running characteristics On the other hand, Comparison 1 was manufactured under the quite same conditions except that the incident angle was set to be in the range from 40° to 10°. Therefore, the S/N can take the same value as that of Embodiment 1, however, the friction coefficient (µ) becomes large to deteriorate the running characteristics thereby making it impossible to obtain a practical tape. Further, Comparison 2 was manufactured by the conventional manufacturing method. Considering that Comparison 1 exhibits a large friction coefficient (µ) and inferior running characteristics Ra is increased to form the projections on the surface of the substrate to thereby lower the friction coefficient (µ) in Comparison 2. By so doing, the friction coefficient (µ) can be lowered but even S/N is lowered as well. According to the method that the surface of the thin film is roughened by forming the projections on the surface of the substrate as shown in Comparison 2, it is difficult to control the configuration of the thin film surface in such a manner that a low friction coefficient (µ) and a high S/N are both attained. Comparison 3 is the case that the substrate has a small number of large projections, Comparison 4 is the case that the substrate has a large number of small projections and Comparison 5 is the case that the substrate has a large number of large projections. In all these cases, the thin film was manufactured in the same manner as that of the embodiment in respect of other points, and however, it is evident that every film is inferior to the thin film of the present embodiment form the viewpoint of S/N.

It is found from the results of Table 1 that it is difficult to make the recording and reproducing characteristic and the running characteristics compatible with each other by the conventional method. On the other hand, the tape of the present embodiment enables these characteristics to be compatible with each other. The reason for this is considered as follows. Namely, since the uniform projections are formed, it is possible to form the projections enough to ensure the running characteristics besides the gap between the magnetic head and the thin film magnetic layer can be kept to be minimum. Further, if there are formed non-uniform projections on the thin film surface, in a case where the recording and reproducing is performed by making use of a metal-in-gap type head (MIG head), there is caused an offset in the MIG head between the metal portion and the ferrite portion thereof due to partial abrasion of the metal portion, resulting in the problem of reduction of the output. The method of the present invention, however, is effective even in reduction of partial abrasion of the head because the uniform projections are formed on the thin film surface.

As has been described above, the method of the present embodiment is very excellent in designing the uniform surface roughness on the alloy thin film surface.

The present embodiment has been described as to the case of manufacturing the Co-Cr magnetic tape, however, the present invention is also effective in forming a thin film of other metal or alloy such as Co-Cr-Ni, Co-O, Co-Ni-O or the like. Further, the present invention is successful for the case that more than two thin film layers are formed provided that at least one of the thin film layers is formed under the conditions that the initial incident angle is not less than 50° and the temperature of the substrate is not less than 100°C, preferably not less than 200°. In addition, the present embodiment has been described as to the case where the polyimide substrate is employed as the substrate, however, the present invention is also effective in the cases in which other heat-resisting high polymer substrate such as a polyethylene naphthalate substrate, a polyamide substrate or the like, metal substrate such as an aluminum substrate and a glass substrate are employed.

### Embodiment 2

Next, the method for manufacturing a thin film according to the present invention will be described in reference to another embodiment.

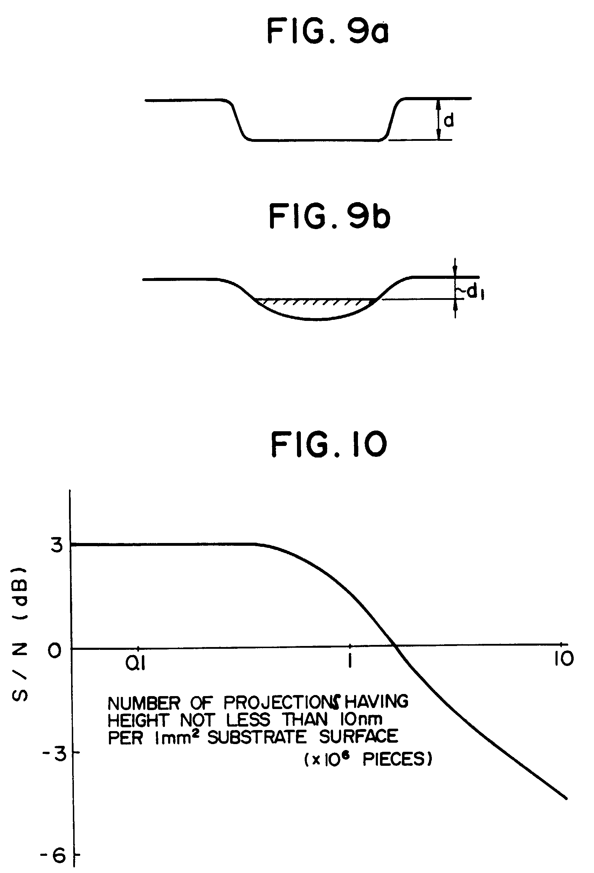

As the substrate, a polyimide substrate was employed, which is formed on a surface thereof with projections by dispersing particles in this surface beforehand. In the substrate employed in this case, the number of the projections with height not less than 10 nm is controlled to be in the range of 0.05 x 10⁶ - 10 x 10⁶ projections per 1 mm² by varying the number of the particles to be dispersed. The surface roughness Ra of the substrate in this case is in the range of 1.8 - 2.5 nm. Using this substrate, a Co-Cr tape was manufactured in the same manner as Embodiment 1. S/N of the luminance signal measured in the same way as Embodiment 1 is shown in Figure 10. It is seen from Figure 10 that when the number of the projections is greater than 1 x 10⁶ projections per 1 mm², S/N is kept nearly constant, while when it exceeds the above values, S/N is lowered to a great extent. The reason for this is considered as follows. Namely, if the number of the projections formed originally is too large, when a thin film is manufactured by the method of the present invention, a large number of high projections are formed on the thin film, resulting in a large spacing loss at the time of recording and reproducing. Further, as a result of the measurement of µ by the same method as Embodiment 1, it is found that µ of the medium shown in Figure 10 is kept nearly constant at about 0.15. It is considered that µ of the medium shown in Figure 10 does not greatly depend on the number of the projections formed on the surface of the original substrate but on the formation of the projections in the process of manufacturing the thin film using the thin film manufacturing method of the present invention. As described above, by manufacturing the thin film making use of the manufacturing method of the present invention with use of the substrate in which not more than 1 x 10⁶ projections with a height level of 10 nm are formed on the surface thereof per 1 mm², it becomes possible to manufacture a thin film which satisfies both the recording and reproducing characteristics and the running performance.

The present embodiment has been described as to the case of manufacturing the Co-Cr magnetic tape, however, the present invention is also effective in forming a thin film of other metal or alloy such as Co-Cr-Ni, Co-O, Co-Ni-O or the like. In addition, the present embodiment has been described as to the case that the polyimide substrate is employed as the substrate, however, the present invention is also effective in the cases in which other heat-resisting polymer substrate such as a polyethylene naphthalate substrate, a polyamide substrate or the like, metal substrate such as an aluminum substrate and a glass substrate are employed.

### Embodiment 3

Next, the method for manufacturing a thin film according to the present invention will be described in conjunction with still another embodiment.

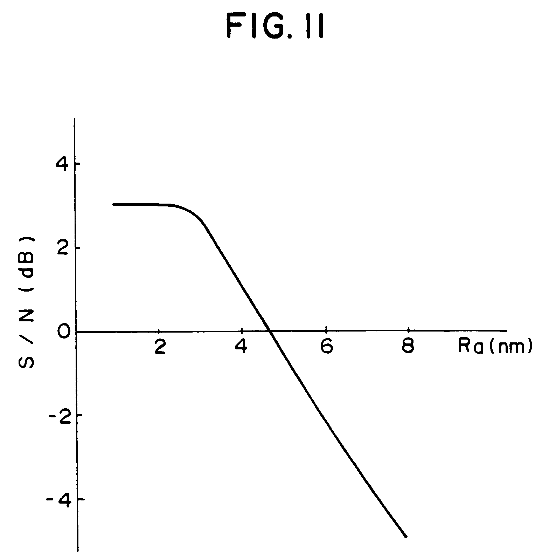

As the substrate, a polyimide substrate was employed, which is formed on a surface thereof with projections by dispersing particles on this surface beforehand. In the substrate employed in this case, the number of the particles to be dispersed is kept nearly constant at about 0.5 x 10⁶ particles per 1 mm², while Ra is varied in the range of 1 - 8 nm by varying the size of the particles to be dispersed. Using this substrate, a Co-Cr tape was manufactured in the same manner as Embodiment 1. S/N of the luminance signal measured in the same way as Embodiment 1 is shown in Figure 11. It is seen from Figure 11 that a surface roughness Ra below 3 pm tends to keep S/N of the Co-Cr tape nearly constant, while a surface roughness Ra exceeding 3 nm tends to result in reduction of S/N. The reason for this is considered as follows. Namely, if the Ra of the original film exceeds 3nm, when a thin film is manufactured by the method of the present invention, some projections of the surface of the film are too high to get good recording and reproducing performances. Further, as a result of the measurement of µ by the same method as Embodiment 1, it is found that µ of the medium shown in Figure 11 is kept nearly constant at about 0.15. The reason for this is considered that µ of the medium shown in Figure 11 does not greatly depend on the projections formed on the surface of the original substrate but depends on the formation of the projections in the process of manufacturing the thin film using the thin film manufacturing method of the present invention. As described above, by manufacturing the thin film making use of the manufacturing method of the present invention with use of the substrate the surface roughness Ra of which is not more than 3 nm, it becomes possible to manufacture a thin film which satisfies both the recording and reproducing characteristics and the running performance.

The present embodiment has been described as to the case of manufacturing the Co-Cr magnetic tape, however, the present invention is also effective in forming a thin film of other metal or alloy such as Co-Cr-Ni, Co-O, Co-Ni-O or the like. In addition, the present embodiment has been described as to the case that the polyimide substrate is employed as the substrate, and however, the present invention is also effective in the case in which other heat-resisting polymer substrate such as a polyethylene naphthalate substrate, a polyamide substrate or the like, metal substrate such as an aluminum substrate and a glass substrate are employed.

### Embodiments 4 - 7

Next, the manufacturing method according to the present invention will be described in regard to a different embodiment.

A Co-O alloy thin film was formed on a smooth substrate and the temperature of the substrate at the time of forming the thin film and the dynamic friction coefficient of the thin film thus prepared were investigated.

As the substrate, a polyimide substrate was employed having a thickness of 10 µm, a Ra of 1.8 nm and a projection density of not more than 1 x 10⁶ projections /mm² with respect to projections having height not less than 5 nm. A Co-O alloy thin film was formed by utilizing the vacuum deposition apparatus shown in Figure 3. In the first place, after exhausting the air from the inside of the deposition apparatus to a pressure of 6.7 x 10⁻² Pa (5.0 x 10⁻⁴ Torr) or less, oxygen gas was introduced at a rate of 300 cm³/min through a gas introducing pipe 12. In this case, as the evaporation source 10, Co with purity of 99.9% was used. The incident angle of the evaporated atoms upon the substrate was so set that φi = 70° and φf = 40°. The Co-O thin film of 0.2 µm thickness was formed under the conditions that the conveying speed of the substrate was 10 m/min and the film accumulation speed was 0.2 µm/sec. The temperature of the substrate was varied by varying the temperature of the cylindrical can 7. The Co-O thin film prepared in this way was slit into the tape of 8 mm width and the dynamic friction coefficient (µ) was measured by the drawing method. The conditions of measurement at this time were such that the material of a post was SUS303, the surface roughness was 0.2S, the relative velocity of the tape and the post was 3.8 m/min, and the pressure applied was 20gf. The relationship between the results of measurement of the dynamic friction coefficient obtained by the drawing method and the temperature of the substrate at the time of forming the thin film are shown in Table 2. It is seen from the results of Table 2 that the dynamic friction coefficient (µ) is lowered as the temperature of the substrate at the time of manufacturing the thin film is raised. It is considered that this is because the crystal grains become coarse in size with the rise of the substrate temperature so that the larger projections are formed on the surface of the thin film. It is seen from Table 2 that it is necessary to set the temperature at at least 100°C for practical use as the magnetic recording medium. Further, a temperature not less than 200°C makes it possible to obtain the film of a lower friction coefficient. The present embodiment has been described as to the case that the polyimide substrate is employed as the substrate, however, the present invention is also effective in the cases in which other heat-resisting polymer substrates such as a polyethylene naphthalate substrate, a polyamide substrate or the like, metal substrate such as an aluminum substrate and a glass substrate are employed.

### Embodiments 8 - 11

Next, the manufacturing method according to the present invention will be described in conjunction with a further different embodiment.

In this embodiment, such a substrate was employed that is formed on the surface thereof with concaved portions beforehand. Figures 9a and 9b show the section of the concaved portion of the substrate. The depth d of the concaved portion was defined as shown in Figure 9a. The configuration of the surface of the substrate in which the concaved portions are formed was observed with the STM. As a result, the ratio of the area occupied by the concaved portions with depths not less than 8 nm to the overall surface area was obtained. The ratio thus obtained is shown about several substrates (in Table 3). Further in a case where the concaved portions are each formed in the shape as shown in Figure 9b, the area of the concaved portion means the area of a part thereof having a depth d₁ of 8 nm or more (hatched part in the drawing).

Using the polyimide substrates each having the concaved portions formed therein beforehand as shown in Table 3, Co-Cr tapes were manufactured in quite the same manner as Embodiment 1. S/N of the luminance signal and µ of the tapes thus manufactured were evaluated by the same method as Embodiment 1. The results of this evaluation about various substrates are shown in Table 3.

It is seen from Table 3 that µ is lowered as the area ratio of the concaved portions in the surface of the substrate is increased. It is considered that this is because the actual contact area between the substrate and the SUS post is reduced with the increase of the area ratio of the concaved portions. Concerning the recording and reproducing characteristics reduction of S/N in Embodiments 6 - 9 is nearly negligible since it does not exceed 1 dB in comparison with Embodiment 1 that has no concaved portions formed therein. In consequence, in a case where the concaved portions are formed in the surface of the substrate, there is no possibility that the projections become higher due to formation of the thin film unlike the cases that the projections are formed (such as Comparisons 3, 4 and 5 in Table 1), resulting in that the spacing loss between the magnetic head and the thin film magnetic layer is not increased, thereby making it possible to manufacture a medium with high S/N. As shown in Comparisons 9 and 10, however, in a case where the area ratio of the concaved portions exceeds 40%, it is considered that, even if the height of projections is low, S/N is reduced greatly due to the spacing loss caused by the concaved portions. As described above, from the results of Table 3, by employing, in the thin film manufacturing method of the present invention, the substrate in which the ratio of the area occupied by the concaved portions with depths not less than 8 nm to the overall surface area is in the range from 5% to 30%, it is possible to manufacture a magnetic recording medium with high S/N and low µ.

The present embodiment has been described as to the case of manufacturing the Co-Cr magnetic tape, and however, the present invention is also effective in forming a thin film of other metal or alloy such as Co-Cr-Ni, Co-O, Co-Ni-O or the like. In addition, the present embodiment has been described as to the case that the polyimide substrate is employed as the substrate, and however, the present invention is also effective in cases in which other heat-resisting high polymer substrates such as a polyethylene naphthalate substrate, a polyamide substrate or the like, metal substrate such as an aluminum substrate and a glass substrate are employed.

**TABLE 1**

| | Incident angle (°) | Ra (nm) | Number of projections with height levels not less than 10 nm per 10 µ m2 | S/N (dB) | µ |
|---|---|---|---|---|---|
| Embodiment 1 | 50 - 20 | 1.8 | 0.5 | +3 | 0.15 |
| Comparison 1 | 40 - 10 | 1.8 | 0.5 | +3 | 0.25 |
| Comparison 2 | 40 - 10 | 3.5 | 100 | 0 | 0.15 |
| Comparison 3 | 50 - 20 | 3.5 | 10 | 0 | 0.15 |
| Comparison 4 | 50 - 20 | 2.5 | 20 | -1 | 0.15 |
| Comparison 5 | 50 - 20 | 3.5 | 100 | -2 | 0.15 |

**TABLE 2**

| | Temperature of substrate (°) | µ |
|---|---|---|
| Comparison 6 | 30 | 0.3 |
| Comparison 7 | 50 | 0.3 |
| Comparison 8 | 80 | 0.25 |
| Embodiment 2 | 100 | 0.20 |
| Embodiment 3 | 150 | 0.18 |
| Embodiment 4 | 200 | 0.15 |
| Embodiment 5 | 250 | 0.13 |

**TABLE 3**

| | Area ratio of concaved portions(%) | S/N (dB) | µ |
|---|---|---|---|
| Embodiment 1 | 0 | +3 | 0.15 |
| Embodiment 6 | 5 | +3 | 0.13 |
| Embodiment 7 | 10 | +2.5 | 0.12 |
| Embodiment 8 | 20 | +2.5 | 0.12 |
| Embodiment 9 | 30 | +2 | 0.11 |
| Comparison 9 | 40 | 0 | 0.11 |
| Comparison 10 | 50 | -1 | 0.10 |

## Claims

1. A method for manufacturing a thin film of metal or alloy, comprising the steps of:
preparing a substrate which has a center-line-averaged surface roughness Ra of not more than 3 nm with respect to the center line of the surface of the substrate and which is formed on the surface thereof with projections with a height not less than 10 nm at a density of not more than 1 x 10⁶ projections/mm²; and
depositing by a vacuum deposition process, on said substrate maintained at a temperature of not less than 100 °C, atoms serving to constitute the thin film at an initial incident angle of not less than 50°, said thin film having a thickness of from 100 nm to 400 nm.

2. The method according to claim 1, wherein the temperature of the substrate is not less than 200 °C.

3. The method according to claim 1 or 2, wherein the thin film is mainly composed of Co-O, Co-Ni-O, Co-Cr or Co-Cr-Ni.

4. The method according to any preceding claim, wherein the ratio of the area occupied by concaved portions with depths not less than 8 nm to the overall surface area is in the range to 30%.

## Patentansprüche

1. Verfahren zur Herstellung eines Dünnfilms aus Metall oder einer Legierung, umfassend die Schritte:
Herstellen eines Substrats, das in der Mittellinie einen Durchschnittswert der Oberflächenrauhigkeit Ra von nicht mehr als 3 nm bezüglich der Mittellinie der Oberfläche des Substrats hat und das auf seiner Oberfläche mit Erhebungen mit einer Höhe von nicht weniger als 10 nm bei einer Dichte von nicht mehr als 1 x 10⁶ Erhebungen/mm² geformt ist; und
Abscheiden von Atomen, die zur Bildung des Dünnfilms dienen, mit einem anfänglichen Einfallswinkel von nicht weniger als 50° auf dem Substrat, das auf einer Temperatur von nicht weniger als 100 °C gehalten wird, durch ein Vakuumabscheidungsverfahren, wobei der Dünnfilm eine Dicke von 100 nm bis 400 nm hat.

2. Verfahren nach Anspruch 1, bei welchem die Temperatur des Substrats nicht weniger als 200 °C beträgt.

3. Verfahren nach Anspruch 1 oder 2, bei welchem der Dünnfilm hauptsächlich aus Co-O, Co-Ni-O, Co-Cr oder Co-Cr-Ni zusammengesetzt ist.

4. Verfahren nach einem der vorstehenden Ansprüche, bei welchem das Verhältnis der Fläche, die von konkaven Abschnitten mit einer Tiefe von nicht weniger als 8 nm eingenommen wird, zu der Gesamtfläche im Bereich von 30% liegt.

## Revendications

1. Procédé de fabrication d'un film mince métallique ou d'alliage, comprenant les étapes consistant à :
préparer un substrat qui présente une rugosité de surface moyenne au niveau de la ligne médiane Ra ne dépassant pas 3 nm par rapport à la ligne médiane de la surface du substrat et sur la surface duquel sont formées des protubérances ayant une hauteur non inférieure à 10 nm à une densité ne dépassant pas 1 x10⁶ protubérances/mm²; et
déposer par un procédé de dépôt sous vide, sur ledit substrat maintenu à une température non inférieure à 100°C, des atomes servant à constituer le film mince selon un angle d'incidence initial non inférieur à 50°,ledit film mince ayant une épaisseur de 100 nm à 400 nm.

2. Procédé selon la revendication 1, dans lequel la température du substrat n'est pas inférieure à 200° C.

3. Procédé selon la revendication 1 ou 2, dans lequel le film mince est principalement composé de Co-C, Co-Ni-O, Co-Cr ou de Co-Cr-Ni.

4. Procédé selon l'une quelconque des revendications précédentes, dans lequel le rapport de la zone occupée par les parties rendues concaves ayant des profondeurs non inférieures à 8 nm à la surface spécifique totale est de l'ordre de 30 %.
